# EUROPÄISCHE PATENTSCHRIFT

(11) **EP 3 346 889 B1**
(45) Veröffentlichungstag und Bekanntmachung des Hinweises auf die Patenterteilung: **02.06.2021**
(21) Anmeldenummer: 16763760.2
(22) Anmeldetag: 08.09.2016
(51) Int. Cl.: A47J 31/18, A47J 31/46, A47J 31/60, A47J 31/057

(54) **TEEAUTOMAT UND VERFAHREN ZU DESSEN BETRIEB**
TEA MACHINE AND METHOD FOR THE OPERATION THEREOF
MACHINE À THÉ ET SON PROCÉDÉ DE FONCTIONNEMENT

(30) Priorität: 09.09.2015 DE 102015115181
(43) Veröffentlichungstag der Anmeldung: 18.07.2018
(73) Patentinhaber: Vorwerk & Co. Interholding GmbH, 42275 Wuppertal (DE)
(72) Erfinder: GROOM, Sascha, 48607 Ochtrup (DE); RENTZSCH, Björn, 42115 Wuppertal (DE)
(74) Vertreter: Cohausz & Florack
(86) Internationale Anmeldenummer: PCT/EP2016/071130
(87) Internationale Veröffentlichungsnummer: WO 2017/042246

(56) Entgegenhaltungen:
- EP-A1- 2 353 474
- EP-A1- 2 567 642
- EP-A1- 2 633 789
- WO-A1-2008/049163
- WO-A1-2016/005110
- WO-A1-2016/050657
- WO-A1-2016/083485
- DE-U1-202006 014 509
- US-A1- 2014 150 667

## Beschreibung

Die Erfindung betrifft einen Teeautomaten, eingerichtet zur automatischen Zubereitung von Teegetränken, und ein Verfahren zum Betrieb eines solchen Teeautomaten.

Während Kaffeeautomaten zum automatischen Zubereiten von Kaffeegetränken seit langem bekannt sind, sind erst in jüngerer Zeit Teeautomaten entwickelt worden, die speziell zur automatischen Zubereitung von Teegetränken vorgesehen sind.

Es ist bekannt, Tee mit Hilfe von Teeautomaten zuzubereiten, in die eine mit Teeblättern gefüllte Teekapsel eingesetzt wird. Analog zur Kaffeezubereitung mit Kaffeekapseln wird bei diesen Teeautomaten heißes Wasser durch die Teekapsel gepresst. Bei diesen Kapselautomaten ist die Einstellung der Brühzeit jedoch nur sehr eingeschränkt möglich.

Weiterhin sind Teeautomaten bekannt, die zwei Kammern aufweisen, wobei ein Teegetränk in einer Kammer gebrüht und dann nach Ende der Brühzeit unter Abtrennung der Teeblätter in die zweite Kammer überführt wird. Derartige Teeautomaten mit zwei verschiedenen Kammern sind jedoch sehr voluminös.

Schließlich sind Teeautomaten bekannt, bei denen Teeblätter in einen Käfig gegeben werden und dieser dann automatisch in eine Kanne mit heißem Wasser getaucht wird. Derartige Teeautomaten mit einer automatisierten Tauchvorrichtung für in einen Käfig gegebene Teeblätter sind jedoch hinsichtlich ihrer Handhabbarkeit verbesserungsbedürftig Das Dokument EP 2 567 642 A1 offenbart eine Teemaschine.

Insgesamt ist die Handhabung der bekannten Teeautomaten recht aufwändig. Insbesondere ist das Entfernen verbliebener Teeblätter aus den Automaten problematisch und kann sogar eine Teildemontage des Teeautomaten erfordern.

Bei der händischen Zubereitung von Teegetränken ist bekannt, Teeblätter in ein Teeei zu füllen und in heißes Wasser zu hängen. Die Teeblätter lassen sich jedoch teilweise nur schwer aus dem Teeei entfernen. Zudem kann es zu einer geschmacksbeeinträchtigenden Kontamination durch das Teeei kommen.

Weiterhin ist die Verwendung von Teeeiern, bei denen Teeblätter in einen Käfig eingesperrt werden, in asiatischen Kulturkreisen, beispielsweise bei einer asiatischen Teezeremonie, unüblich und teilweise aus kulturellen und geschmacklichen Gründen nicht vorstellbar.

Werden Teeblätter lose in heißes Wasser gegeben, sind diese nur recht schwer zu entfernen, so dass es in der Regel erforderlich ist, die Teeblätter durch Umfüllen des Teegetränks mit einem Filter abzuscheiden.

Bei Verwendung eines Teeeis oder dgl. in einer Teekanne ist es bekannt, das Teeei nach der Verwendung aus der Teekanne zu nehmen und per Hand oder in der Spülmaschine zu säubern. Bei Teemaschinen aus dem Stand der Technik ist die Säuberung sehr aufwändig. Teilweise müssen die Teemaschinen auseinander genommen werden, um die mit dem Tee in Kontakt stehenden Teile reinigen zu können. Weiterhin können bei der Reinigung geschmacksbeeinträchtigende Kontaminationen nicht vermieden werden.

Bei Kaffeevollautomaten ist es bekannt, die Brüheinheit regelmäßig mit Wasser durchzuspülen, wobei das Spülwasser durch einen Siebboden fließt, auf dem normalerweise eine Tasse abgestellt wird, wenn Kaffee in eine Tasse gefüllt werden soll. Dies hat den Nachteil, dass der die Tasse beim Brühvorgang tragende Siebboden stets aufwändig sauber zu halten ist. Andernfalls kann der Tassenboden mit Kaffeeresten und/oder Spülwasser kontaminiert werden, wodurch der Untergrund, auf den die Tasse nach dem Befüllen gestellt wird, leicht verschmutzt wird.

Vor diesem Hintergrund liegt der vorliegenden Erfindung die Aufgabe zu Grunde einen Teeautomaten und ein Verfahren zum Betrieb von Teeautomaten zur Verfügung zu stellen, bei denen unnötige Verschmutzungen des Siebbodens möglichst vermieden werden.

Diese Aufgabe wird erfindungsgemäß gelöst durch einen Teeautomaten nach Anspruch 1 sowie durch ein Verfahren nach Anspruch 6.

Der Teeautomat kann einen Teesiebeinsatz für einen Teeautomaten aufweisen, wobei der Teesiebeinsatz dazu eingerichtet ist, vollständig in eine Brühkammer eines Teeautomaten eingeführt zu werden, wobei der Teesiebeinsatz einen Teesiebeinsatzkörper aufweist, der einen zur Oberseite des Teesiebeinsatzes geöffneten und einen zur Unterseite des Teesiebeinsatzes zumindest wasserdurchlässigen Innenraum für Teeblätter umgibt, und wobei an dem Teesiebeinsatz ein Teesieb derart angebracht oder anbringbar ist, dass Teeblätter daran gehindert werden, durch die Unterseite des Teesiebeinsatzes aus dem Teesiebeinsatz heraus zu gelangen. Vorzugsweise weist der Teesiebeinsatzkörper einen Führungsabschnitt auf, der dazu eingerichtet ist, den Teesiebeinsatz entlang der Innenwand einer Brühkammer zu führen.

Mit einem solchen Teesiebeinsatz können Teeblätter auf einfache und kontrollierte Weise für einen Brühvorgang in die Brühkammer eines Teeautomaten eingeführt werden. Beispielsweise kann der Teesiebeinsatz unter Freigabe der Teeblätter in das zu aromatisierende Wasser getaucht werden. Dadurch dass der für die Teeblätter vorgesehene Innenraum des Teesiebeinsatzes nach oben geöffnet ist, können sich die Teeblätter frei in dem für den Brühvorgang in die Brühkammer einleiteten Wasser bewegen. Da die Teeblätter durch das Teesieb daran gehindert werden, durch die Unterseite des Teesiebeinsatzes aus dem Teesiebeinsatz heraus zu gelangen, können die sich im Wasser bewegenden Teeblätter am Ende des Brühvorgang vorzugsweise durch Anheben des Teesiebeinsatzes wieder mit dem Teesiebeinsatz eingesammelt und vorzugsweise restlos aus der Brühkammer entfernt, insbesondere herausgehoben werden.

Die Brühkammer einer Teemaschine wird allgemein auch als Ziehgefäß bezeichnet, da das Brühen von Teegetränken auch "Ziehen" genannt wird.

Der Teesiebeinsatz ist dazu eingerichtet, vollständig in eine Brühkammer bzw. auf den Boden einer Brühkammer eines Teeautomaten eingeführt bzw. abgesenkt zu werden. Damit unterscheidet sich der Teesiebeinsatz insbesondere von Teesieben, die zum Aufbrühen von Tee von oben in eine Teekanne eingesetzt werden und einen Flansch aufweisen, der verhindert, dass das Teesieb in die Kanne rutscht.

An dem Teesiebeinsatz ist ein Teesieb derart angebracht oder anbringbar, dass Teeblätter daran gehindert werden, durch die Unterseite des Teesiebeinsatzes aus dem Teesiebeinsatz heraus zu gelangen. Beispielsweise kann der Teesiebeinsatzkörper eine Aufnahme für ein solches Teesieb aufweisen, wobei das Teesieb dauerhaft und/oder reversibel in der Aufnahme aufgenommen sein kann. Beispielsweise kann das Teesieb den Boden des Teesiebeinsatzes bilden. Der Teesiebeinsatzkörper kann auch selbst einen Abschnitt aufweisen, der in Form eines Teesiebs ausgebildet ist.

Unter einem Teesieb wird vorliegend jede Membran verstanden, die einerseits flüssigkeitsdurchlässig und andererseits für Teeblätter undurchlässig ist. Das Teesieb kann starr ausgebildet sein, beispielsweise als starres bzw. unflexibles Sieb oder Gitter, zum Beispiel aus Metall oder Kunststoff. Alternativ kann das Teesieb auch flexibel ausgebildet sein, beispielsweise als flexibles Geflecht oder Gewebe. Als flexible Materialien für ein flexibles Teesieb kommen beispielsweise Papier, Vlies oder Mull in Frage. Das Teesieb kann für die einmalige Anwendung oder auch für die mehrmalige Anwendung vorgesehen, d.h. wiederverwendbar, sein.

Der Teesiebeinsatzkörper weist vorzugsweise einen Führungsabschnitt auf, der dazu eingerichtet ist, den Teesiebeinsatz entlang der Innenwand einer Brühkammer zu führen. Zu diesem Zweck weist der Führungsabschnitt vorzugsweise einen in axialer Richtung des Teesiebeinsatzes im Wesentlichen gleichbleibenden Außenquerschnitt auf. Der Führungsabschnitt kann beispielsweise einen ovalen oder kreisförmigen oder auch einen eckigen, beispielsweise viereckigen Außenquerschnitt aufweisen. Vorzugsweise ist der Außenquerschnitt an den Innenquerschnitt einer vorgegebenen Brühkammer angepasst. Unter der axialen Richtung des Teesiebeinsatzes wird die Richtung verstanden, die von der Oberseite zur Unterseite des Teesiebeinsatzes verläuft.

Wenn der Führungsabschnitt den Teesiebeinsatzkörper entlang der Innenwand einer Brühkammer führt, gleitet dieser vorzugsweise an der Innenwand der Brühkammer entlang. Zu diesem Zweck ist der Teesiebeinsatzkörper insbesondere so ausgestaltet, dass Abschnitte des Teesiebeinsatzkörpers seitlich nicht derart über den Führungsabschnitt hinausragen, dass der Führungsabschnitt nicht mit der Innenwand der Brühkammer in Kontakt kommen kann.

Die Außengeometrie des Teesiebeinsatzes kann an die Innengeometrie der Brühkammer des Teeautomaten angepasst sein.

Der Teesiebeinsatz kann eine Halterung aufweisen, die dazu eingerichtet ist, ein Teesieb reversibel derart am Teesiebeinsatzkörper zu befestigen, dass Teeblätter daran gehindert werden, durch die Unterseite des Teesiebeinsatzes aus dem Teesiebeinsatz heraus zu gelangen. Das Teesieb ist demnach nicht irreversibel an den Teesiebeinsatz angeschlossen, sondern kann bei Bedarf ausgetauscht werden. Auf diese Weise wird ein hygienischer Betrieb des Teesiebeinsatzes ermöglicht und dessen Lebensdauer verlängert. Zudem können bei Bedarf verschiedene Arten von Teesieben eingesetzt werden.

Die Halterung kann einen Haltering aufweisen, der lösbar mit dem Teesiebeinsatzkörper verbindbar ist, wobei der Haltering dazu eingerichtet ist, ein Teesieb am Teesiebeinsatzkörper zu fixieren. Beispielsweise kann der Haltering mit der Oberseite des Teesiebeinsatzkörpers verbindbar sein. Zwischen dem Haltering und dem Teesiebeinsatzkörper kann dann ein Teesieb, vorzugsweise ein flexibles Teesieb, eingeklemmt und damit auf einfache und effektive Weise am Teesiebeinsatz befestigt werden.

Der Haltering kann mittels einer Rastverbindung, mittels eines Bajonettverschlusses und/oder mittels einer Magnetkupplung lösbar mit dem Teesiebeinsatzkörper verbindbar sein. Dies ermöglicht eine einfache und schnelle Fixierung des Halterings am Teesiebeinsatzkörper und damit einen schnellen Austausch des Teesiebs.

Der Teesiebeinsatz kann eine Abstreifeinrichtung aufweisen, die dazu eingerichtet ist, Teeblätter und/oder einen Wasserfilm von der Innenwand einer Brühkammer abzustreifen, wenn der Teesiebeinsatz in der Brühkammer entlang der Innenwand nach oben verfahren wird. Die Abstreifeinrichtung ist vorzugsweise am oberen Rand des Teesiebeinsatzes angeordnet. Weiterhin ist die Abstreifeinrichtung vorzugsweise so ausgebildet, dass sie gleitend an der Innenwand der Brühkammer anliegt, wenn der Teesiebeinsatz in einer Brühkammer angeordnet ist.

Auf diese Weise kann die Innenwand der Brühkammer beim Verfahren des Teesiebeinsatzes nach oben von den Teeblättern gereinigt werden bzw. Wasser von der Innenwand entfernt werden, so dass die Brühkammer beispielsweise für den nächsten Brühvorgang gereinigt ist. Auf diese Weise ist es beispielsweise nicht mehr notwendig, die Brühkammer auszubauen, um sie dann in einer Spülmaschine zu reinigen. Weiterhin kann auf diese Weise erreicht werden, dass die Brühkammer nach dem Herauffahren des Teesiebeinsatzes für einen nächsten, z.B. zweiten, Brühvorgang bereitsteht, ohne dass weitere Spülungen der Brühkammer erforderlich sind. Dadurch dass an der Innenwand der Brühkammer kein Wasserfilm zurückbleibt, weist das beim folgenden Brühvorgang gebrühte Teegetränk auch keine geschmackliche Kontamination durch den vorhergehenden, z.B. ersten, Brühvorgang auf.

Die Abstreifeinrichtung kann eine an der Oberseite des Teesiebeinsatzes angeordnete, schräg nach Innen gerichtete Fläche aufweisen, die dazu eingerichtet ist, von der Innenwand einer Brühkammer abgestreifte Teeblätter in den Innenraum zu führen. Unter einer schräg nach Innen gerichteten Fläche wird verstanden, dass die Fläche in Richtung des Innenraums gerichtet ist. Auf diese Weise sammeln sich die abgestreiften Teeblätter nicht an der Oberseite des Teesiebeinsatzes, sondern werden in den Innenraum geführt.

Die Abstreifeinrichtung kann mindestens ein Dichtelement, vorzugsweise ein flexibles bzw. elastisches Dichtelement umfassen, das derart angeordnet ist, um den Teesiebeinsatz zur Innenwand einer Brühkammer abzudichten, wenn der Teesiebeinsatz an der Innenwand der Brühkammer angeordnet ist. Das Dichtelement kann beispielsweise als Dichtlippe oder als elastische Dichtung ausgebildet sein. Auf diese Weise kann einerseits verhindert werden, dass Teeblätter zwischen den Teesiebeinsatz und die Innenwand der Brühkammer geraten. Weiterhin kann durch das Dichtelement ein Wasserfilm auf der Innenwand der Brühkammer abgezogen werden, so dass die Innenwand nach dem Verfahren des Teesiebeinsatzes nach oben im Wesentlichen trocken ist.

Der Teeautomat kann Teil eines Systems umfassend einen Teeautomaten, eingerichtet zum Aufbrühen von Teegetränken, der eine nach oben geöffnete Brühkammer aufweist, und ein Teesiebsystem, vorzugsweise das zuvor beschriebene Teesiebsystem, das an die Brühkammer angepasst ist, sein.

Für den Betrieb eines Teeautomaten mit losen Teeblättern müssen die Teeblätter für eine bestimmte Ziehzeit (bzw. Brühzeit) in einer Brühkammer angeordnet werden. Zu diesem Zweck können die Teeblätter in einen Teesiebeinsatz gegeben und dann in die Brühkammer eingeführt werden. Das manuelle Einsetzen eines solchen Teesiebeinsatzes erfordert jedoch unter Umständen eine genaue Positionierung des Teesiebeinsatzes zur Brühkammer und ist daher häufig problematisch. Weiterhin ist auch das manuelle Herausnehmen des Teesiebeinsatzes aus der Brühkammer am Ende des Brühvorgangs problematisch, da der Teesiebeinsatz dann aufgrund des heißen Teewassers typischerweise eine hohe Temperatur aufweist. Weiterhin hat es sich als problematisch herausgestellt, die losen Teeblätter vollständig aus der Brühkammer zu entfernen.

Unter einem Teesiebeinsatz wird ein Behältnis verstanden, das Teeblätter aufnehmen kann und in eine Brühkammer eingeführt werden kann, so dass die Teeblätter während eines Brühvorgangs in der Brühkammer mit Wasser in Kontakt kommen können. Zu diesem Zweck weist der Teesiebeinsatz mindestens eine wasserdurchlässige Membran wie zum Beispiel ein Sieb oder ein Vlies auf, durch welches Wasser aus der Brühkammer in den Teesiebeinsatz gelangen kann und umgekehrt.

Mit dem Begriff Teesieb werden vorliegend nicht nur Siebe im eigentlichen Sinne, sondern auch andere wasserdurchlässige Membrane bezeichnet, beispielsweise Geflechte, Gewebe, Gewirke und der gleichen. Entsprechend wird der Begriff Teesiebeinsatz vorliegend nicht nur für Teesiebeinsätze für Siebe im eigentlichen Sinne verstanden, sondern auch Teesiebeinsätze für andere Arten von wasserdurchlässigen Membranen aufweist.

Der Teesiebeinsatz weist eine Öffnung auf, durch die die Teeblätter in den Teesiebeinsatz eingefüllt bzw. aus diesem entfernt werden können. Die Öffnung kann mit einem Deckel verschließbar sein. Insbesondere kann eine durch ein Teesieb aus flexiblem Material gebildete Tasche zur Aufnahme von Teeblättern mit einem Deckel versehen sein. Bevorzugt ist die Öffnung dauerhaft offen bzw. unverschließbar ausgebildet.

Ein Sprühkopf kann vorgesehen sein, wobei der Sprühkopf zum Einleiten einer Flüssigkeit in eine Brühkammer eines Teeautomaten eingerichtet ist, mit einer Mehrzahl von Auslassdüsen, die so eingerichtet sind, dass, wenn der Sprühkopf an einer nach oben geöffneten Brühkammer angeordnet ist, Flüssigkeit durch die Auslassdüsen in die Brühkammer einleitbar ist. Vorzugsweise sind eine oder mehrere der Auslassdüsen dazu eingerichtet, die durch diese Auslassdüsen austretende Flüssigkeit schräg nach außen zu richten.

Wenn vorzugsweise eine oder mehrere der Auslassdüsen dazu eingerichtet sind, die durch diese Auslassdüsen austretende Flüssigkeit schräg nach außen zu richten, trifft die Flüssigkeit auf die Innenwand der Brühkammer, so dass diese durch die an der Innenwand herabfließende Flüssigkeit gereinigt wird. Die Richtungsangabe "schräg nach außen" bezieht sich vorliegend auf eine Längsachse der vorzugsweise zylindrischen Brühkammer oder auf die axiale Achse(Längsachse) des Sprühkopfes, die von der Oberseite zur Unterseite mittig durch den Sprühkopf verläuft.

Vorzugsweise ist der zuvor beschriebene Sprühkopf an die Brühkammer angepasst.

Bei einer Ausführungsform weist der Sprühkopf eine oder mehrere erste Auslassdüsen auf, die jeweils dazu eingerichtet sind, einen Flüssigkeitsstrahl unter einem ersten Winkel zur axialen Achse des Sprühkopfes aus dem Sprühkopf austreten zu lassen, und der Sprühkopf eine oder mehrere zweite Auslassdüsen aufweist, die jeweils dazu eingerichtet sind, einen Flüssigkeitsstrahl unter einem zweiten, größeren Winkel zur axialen Achse des Sprühkopfes aus dem Sprühkopf austreten zu lassen. Der erste Winkel kann auch 0° betragen, d.h. der zugehörige Flüssigkeitsstrahl kann parallel bzw. im Wesentlichen parallel zur Längsachse der Brühkammer oder parallel bzw. im Wesentlichen parallel zur axialen Achse aus dem Sprühkopf austreten. Der zweite Winkel ist größer als der erste Winkel, vorzugsweise mindestens 45°, so dass der zugehörige Flüssigkeitsstrahl nach außen, vorzugsweise auf die Innenwand der Brühkammer gerichtet ist. Die ersten Auslassdüsen dienen vorzugsweise dazu, Wasser für einen Brühvorgang in eine Brühkammer zu leiten. Die zweiten Auslassdüsen dienen vorzugsweise dazu, eine Reinigungsflüssigkeit für einen Reinigungsvorgang auf die Innenwand einer Brühkammer zu leiten und/oder erwärmtes Wasser zum Vorwärmen der Brühkammer gegen die Innenwand der Brühkammer zu sprühen.

Die Auslassdüsen können vorzugsweise als Sprühdüsen ausgebildet sein, insbesondere die zweiten Auslassdüsen. Weiterhin sind die Auslassdüsen vorzugsweise an der Unterseite des Sprühkopfes angeordnet und bilden vorzugsweise einen randseitigen, ggf. unterbrochenen Ring.

Bei einer weiteren Ausführungsform ist der Sprühkopf dazu eingerichtet, wahlweise in einem Befüllmodus oder in einem Reinigungsmodus betrieben zu werden, wobei die im Reinigungsmodus aus einer oder mehreren der Auslassdüsen austretende Flüssigkeit weiter nach außen gerichtet ist als die im Befüllmodus aus einer oder mehreren der Auslassdüsen austretende Flüssigkeit. Beispielsweise kann der Sprühkopf dazu eingerichtet sein, dass die Flüssigkeitszufuhr zu bestimmten Auslassdüsen, die einen schräg nach außen gerichteten Flüssigkeitsstrahl ausgeben, im Befüllmodus gesperrt und im Reinigungsmodus geöffnet ist.

Bei einer weiteren Ausführungsform ist der Sprühkopf dazu eingerichtet, wahlweise in einem Befüllmodus oder in einem Reinigungsmodus betrieben zu werden, wobei die im Reinigungsmodus aus zumindest einer Auslassdüse austretende Flüssigkeit einen höheren Druck aufweist als die im Befüllmodus aus einer oder mehreren der Auslassdüsen austretende Flüssigkeit. Durch einen höheren Druck des Flüssigkeitsstrahls im Reinigungsmodus kann eine bessere Reinigungswirkung erzielt werden, insbesondere wenn der Flüssigkeitsstrahl auf die Innenwand der Brühkammer gerichtet ist.

Bei einer weiteren Ausführungsform weist der Sprühkopf eine Entlüftungsöffnung auf, so dass, wenn der Sprühkopf an einer nach oben geöffneten Brühkammer angeordnet ist, Luft aus der Brühkammer entweichen kann, insbesondere beim Einleiten von Wasser oder Reinigungsflüssigkeit in die Brühkammer. Indem eine gezielte Entlüftungsöffnung zur Verfügung gestellt wird, kann der Sprühkopf dicht auf die bevorzugt drucklos betriebene Brühkammer aufgesetzt werden. Dadurch kann vermieden werden, dass Flüssigkeit, beispielsweise in Form von Spritzern, aus der oberen Öffnung der Brühkammer austritt.

Die oben genannte Aufgabe wird erfindungsgemäß gelöst durch einen Teeautomaten, eingerichtet zur automatischen Zubereitung von Teegetränken, mit einer nach oben geöffneten Brühkammer, mit einer Heißwasserzuleitung, die dazu eingerichtet ist, heißes Wasser von oben in die Brühkammer einzuleiten, und mit einem an der Brühkammer vorgesehenen Auslass, durch den eine Flüssigkeit aus der Brühkammer herausgeleitet werden kann.

Der Auslass ist vorzugsweise unten an der Brühkammer angeordnet, beispielsweise an der Unterseite der Brühkammer oder im unteren Bereich der Seitenwand der Brühkammer. Der Auslass kann insbesondere über ein Ventil, beispielswiese über ein Magnetventil, gesteuert werden.

Die oben genannte Aufgabe wird erfindungsgemäß zumindest teilweise weiterhin gelöst durch ein Verfahren zum Betrieb eines Teeautomaten, vorzugsweise des zuvor beschriebenen Teeautomaten.

Das Verfahren umfasst vorzugsweise folgende Schritte: Ansteuern der Verfahreinrichtung, um einen Teesiebeinsatz für einen Brühvorgang zum Aufbrühen von in dem Teesiebeinsatz angeordneten Teeblättern in der Brühkammer herab zu fahren, Einleiten von Wasser aus dem Sprühkopf in die Brühkammer zum Aufbrühen eines Teegetränks, vorzugsweise im Befüllmodus des Sprühkopfes, und Auslassen des Teegetränks aus der Brühkammer durch den Auslass, insbesondere in der Ausgabestellung. Die zuvor genannten Schritte werden vorzugsweise in der angegebenen Reihenfolge durchgeführt. Das Herabfahren des Teesiebeinsatzes kann alternativ auch nach dem Einleiten des Wassers in die Brühkammer erfolgen. Die Verfahreinrichtung fährt den Teesiebeinsatz vorzugsweise bis auf den Boden bzw. bis fast auf den Boden der Brühkammer herab, so dass sich die Teeblätter fast im gesamten Wasservolumen in der Brühkammer bewegen können.

Die nachfolgend beschriebenen Ausführungsformen sind sowohl auf den zuvor beschriebenen Teeautomaten, als auch auf das zuvor beschriebene System und das zuvor beschriebene Verfahren anwendbar und können zudem untereinander kombiniert werden.

Bei einer Ausführungsform weist der Teeautomat eine Verfahreinrichtung auf, die dazu eingerichtet ist, einen Teesiebeinsatz, in der Brühkammer zu verfahren, insbesondere einen zuvor beschriebenen Teesiebeinsatz bzw. einen Teesiebeinsatz eines zuvor beschriebenen Teesiebsystems. Die empfohlenermaßen außerhalb der Brühkammer angeordnete Verfahreinrichtung umfasst vorzugsweise ein außerhalb der Brühkammer angeordnetes Kopplungselement und einen Antrieb, der dazu eingerichtet sind, das Kopplungselement entlang der Brühkammer zu bewegen, insbesondere auf und ab, wobei das Kopplungselement und der Teesiebeinsatz bevorzugt magnetisch derart miteinander gekoppelt sind, dass der Teesiebeinsatz bzw. das Teesieb bei einer Bewegung des Kopplungselements mitbewegt wird.

Beispielsweise kann der Teesiebeinsatz einen Magneten, insbesondere einen Permanentmagneten, und gemäß einer Ausführungsform das Kopplungselement einen Magneten, beispielsweise einen Permanentmagneten, aufweisen. Das Kopplungselement und/oder der Teesiebeinsatz kann/können insbesondere einen Elektromagneten aufweisen. Als Antriebsmittel kann beispielsweise ein Motor vorgesehen sein.

Durch die magnetische Kopplung zwischen dem Kopplungselement und dem Teesiebeinsatz kann der Teesiebeinsatz in der Brühkammer bewegt werden, ohne dass weitere mechanische Teile in der Brühkammer erforderlich sind. Dadurch kann eine mögliche Verunreinigung des Teegetränks durch mechanische Teile verhindert werden.

Bei einer Ausführungsform weist der Teeautomat eine Steuerungseinrichtung auf, die dazu eingerichtet ist, das Kopplungselement und damit den Teesiebeinsatz während eines Brühvorgangs wiederholt zu bewegen, insbesondere wiederholt auf und ab zu bewegen. Insbesondere wird der Teesiebeinsatz während des Brühvorgangs in dem in der Brühkammer befindlichen Wasser wiederholt bewegt, insbesondere wiederholt auf und ab bewegt.

Typischerweise sammeln sich die Teeblätter bei einem Aufguss nach einer gewissen Zeit an der Oberfläche des Wassers. Durch das wiederholte Bewegen des Teesiebeinsatzes können die Teeblätter wieder im Wasser verteilt werden, so dass Inhaltsstoffe aus den Teeblättern besser in das Wasser gelangen können.

Erfindungsgemäß ist der Auslass dazu eingerichtet, wahlweise in einer Ausgabestellung (auch als Teeabgabestellung bezeichnet) oder in einer Entsorgungsstellung (auch als Spülstellung bezeichnet) betrieben zu werden, wobei die durch den Auslass aus der Brühkammer herausgeleitete Flüssigkeit in der Ausgabestellung zu einer Teegetränk-Ausgabestelle geleitet wird und in der Entsorgungsstellung zu einem Abfluss geleitet wird. Beispielsweise kann der Auslass eine erste Auslassöffnung an einer Teegetränk-Ausgabestelle und eine zweite Auslassöffnung an einem Abfluss aufweisen, wobei mittels einem oder mehrerer Ventile jeweils eine der Auslassdüsen gesperrt und die jeweils andere Auslassöffnung geöffnet werden kann. Auf diese Weise kann erreicht werden, dass zu entsorgende Flüssigkeit aus der Brühkammer, beispielsweise von einem Reinigungsvorgang, nicht durch die Teegetränk-Ausgabestelle geführt werden muss, sondern über einen gesonderten Abfluss entsorgt werden kann. Es ist daher beispielsweise nicht erforderlich, eine am Teeautomaten abgestellte Tasse für einen Spülvorgang zu entnehmen. Weiterhin kann nicht für den Teegenuss geeignetes Wasser, beispielsweise ein zu entsorgender erster Aufguss oder Spülflüssigkeit oder dgl. für den Benutzer des Teeautomaten unsichtbar entsorgt werden.

Bei dem Verfahren wird der Auslass erfindungsgemäß für die Ausgabe eines Teegetränks in die Ausgabestellung und für die Reinigung der Brühkammer in die Entsorgungsstellung bewegt. Auf diese Weise wird sichergestellt, dass Spülwasser nicht in die Teesammelbehälteraufnahme strömt oder in eine an der Teesammelbehälteraufnahme vorgesehene Tropfschale fließt. Der Teesammelbehälter, wie zum Beispiel eine Tasse, eine Kanne, ein Becher oder dergleichen, kann so auf einer von Tee unkontaminierten Fläche abgestellt werden, so dass bei einem späteren Abstellen des Teesammelbehälters auf einem Tisch oder dergleichen keine Teeränder auf der Unterlage entstehen können. Nach einem Spül- bzw. Reinigungsvorgang wird der Auslass für die Ausgabe vorzugsweise wieder in die Ausgabestellung bewegt.

Unter einer Teegetränk-Ausgabestelle wird eine Stelle verstanden, die zur Ausgabe des fertig gebrühten Teegetränks vorgesehen ist. Beispielsweise kann der Teeautomat eine Teesammelbehälteraufnahme für einen Teesammelbehälter, beispielsweise eine Tasse oder Kanne, aufweisen, über dem die Teegetränk-Ausgabestelle angeordnet ist.

Bei dem Abfluss kann es sich beispielsweise um eine Abwasserleitung oder auch um einen Zugang zu einem Abwasserreservoir, wie zum Beispiel einem Schmutz- oder Spülwassertank, handeln, das vorzugsweise in den Teeautomaten integriert ist.

Bei einer Ausführungsform umfasst der Auslass einen verschwenkbaren Auslassstutzen mit einer Auslassöffnung, der zwischen einer Ausgabestellung, bei der die Auslassöffnung über einer Teesammelbehälteraufnahme für einen Teesammelbehälter angeordnet ist, und einer Entsorgungsstellung, bei der die Auslassöffnung über einer Abflussöffnung angeordnet ist, verschwenkbar ist. Vorzugsweise ist eine Antriebseinheit vorgesehen, um den Auslassstutzen automatisch zu verschwenken. Zweckmäßigerweise schwenkt der Auslassstutzen nach dem Ablassen eines nicht für den Konsum bestimmten ersten Aufgusses und/oder von Spülflüssigkeit automatisch in die Ausgabestellung zurück.

Bei einer weiteren Ausführungsform umfasst die Heißwasserzuleitung einen Sprühkopf, der so an der nach oben geöffneten Brühkammer angeordnet werden kann, dass aus dem Sprühkopf Flüssigkeit in die Brühkammer einleitbar ist, wobei eine oder mehrere der Auslassdüsen des Sprühkopfes so eingerichtet sind, dass, wenn der Sprühkopf an der Brühkammer angeordnet ist, die aus diesen Auslassdüsen austretende Flüssigkeit auf die Innenwand der Brühkammer gerichtet ist.

Bei einer weiteren Ausführungsform weist der Teeautomat eine Steuerungseinrichtung auf, die zur Steuerung des Teeautomaten entsprechend des zuvor beschriebenen Verfahrens eingerichtet ist. Die Steuerungseinrichtung kann beispielsweise einen Mikroprozessor und einen damit verbundenen Speicher mit Befehlen aufweisen, wobei die Ausführung der Befehle auf dem Mikroprozessor die Ausführung des Verfahrens bewirkt. Vorzugsweise weist der Teeautomat eine Benutzereingabeschnittstelle auf, die zur Entgegennahme von Benutzereingaben und Weiterleitung der Benutzereingaben an die Steuerungseinrichtung eingerichtet ist. Die Steuerungseinrichtung ist vorzugsweise dazu eingerichtet, den Teeautomaten abhängig von Benutzereingaben an der Benutzereingabeschnittstelle zu steuern.

Beispielsweise kann die Steuerungseinrichtung dazu eingerichtet zu sein, für einen Brühvorgang die Menge und/oder Temperatur des in die Brühkammer eingeleiteten Wassers zu steuern, vorzugsweise abhängig von einer Benutzereingabe. Weiterhin kann die Steuerungseinrichtung dazu eingerichtet sein, vor und/oder nach einem Brühvorgang einen Spülvorgang durchzuführen, so dass die Brühkammer mit Wasser durchgespült wird. Durch das Spülen der Brühkammer vor einem Brühvorgang kann eine Reinigung der Brühkammer durchgeführt werden. Weiterhin kann die Brühkammer für den nachfolgenden Brühvorgang vorgewärmt werden.

Bei einer Ausführungsform umfasst das Verfahren den Schritt: Ansteuern der Verfahreinrichtung, um den Teesiebeinsatz am Ende eines Brühvorgangs in der Brühkammer nach oben zu fahren, vorzugsweise zeitgleich bzw. simultan mit dem Auslassen des Teegetränks durch den Auslass. Dadurch dass der Teesiebeinsatz nach oben gefahren wird, während das Teegetränk aus der Brühkammer ausgelassen wird, kommt es zu einer gegensätzlichen Bewegung des Teegetränks und des Teesiebeinsatzes, durch die im Teegetränk verteilte Teeblätter in den Innenraum des Teesiebeinsatzes gespült werden. Das auslaufende Teegetränk führt dadurch selbst zu einer Reinigung der Brühkammer.

Alternativ kann das Auslassen des Teegetränks durch den Auslass und das Herauffahren des Teesiebeinsatzes auch nacheinander erfolgen. In diesem Fall kann es jedoch passieren, dass vor allem an der Innenwand der Brühkammer haftende Teeblätter lediglich nach oben geschoben werden und nicht mehr in den Innenraum des Teesiebeinsatzes gelangen.

Bei einer weiteren Ausführungsform umfasst das Verfahren den Schritt: Einleiten einer Reinigungsflüssigkeit in die Brühkammer, vorzugsweise Einleiten von auf die Innenwand der Brühkammer gerichteter Reinigungsflüssigkeit aus dem Sprühkopf in die Brühkammer, insbesondere im Reinigungsmodus des Sprühkopfes. Bei der Reinigungsflüssigkeit kann es sich um Wasser handeln. Insbesondere kann das gleiche Wasser verwendet werden, das auch zur Durchführung des Brühvorgangs verwendet wird. Alternativ kann auch eine gesonderte Zuführung für eine Reinigungsflüssigkeit vorgesehen werden, beispielsweise aus einem in den Teeautomaten integrierten Reinigungsflüssigkeits-Reservoir. Beispielsweise kann die Reinigungsflüssigkeit mit einer Säure wie zum Beispiel Zitronen- oder Essigsäure versetzt sein, um neben der Reinigung der Brühkammer auch noch einen Entkalkungseffekt zu erreichen.

Das Einleiten der Reinigungsflüssigkeit kann auch in mehreren Schritten erfolgen. Insbesondere können nacheinander verschiedene Reinigungsflüssigkeiten in die Brühkammer eingeleitet werden. So ist es beispielsweise denkbar, in einem ersten Schritt eine mit Reinigungsmitteln oder anderen Zusätzen versetze Reinigungsflüssigkeit in die Brühkammer einzuleiten und dann in einem zweiten Schritt mit Wasser nachzuspülen, um Verunreinigungen der Brühkammer mit Fremdstoffen zu vermeiden. Es ist auch die Durchführung einer vorgegebenen Reinigungssequenz denkbar, beispielweise: Spülen mit Wasser, Reinigen mit Reinigungsflüssigkeit, Spülen mit Wasser, Spülen mit Wasser. Durch ein mehrfaches Spülen mit Wasser nach dem Reinigen mit Reinigungsflüssigkeit wird sichergestellt, dass weder die Brühkammer, noch ein vorzugsweise der Brühkammer nachgeschaltetes Ventil, z.B. Magnetventil, Geschmackskontaminationen aufweist.

Bei einer weiteren Ausführungsform umfasst das Verfahren: Vorwärmen der Brühkammer für einen Brühvorgang durch Spülen der Brühkammer mit heißem Wasser, insbesondere mit einer vorgegebenen Wassermenge, und Durchführen eines Brühvorgangs in der vorgewärmten Brühkammer. Durch das Vorwärmen der Brühkammer wird ein vorzeitiges Abkühlen des Teegetränks während des Brühvorgangs verhindert werden. Der Sprühkopf wird für das Vorwärmen vorzugsweise im Reinigungsmodus betrieben, so dass das heiße Wasser auf die Innenwand der Brühkammer gerichtet wird und diese vorwärmt.

Bei einer weiteren Ausführungsform wird nach Entnahme des Teesiebsystems ein Spülvorgang durchgeführt, d.h. eine vorgegebene Wassermenge durch die Sprühdüse, vorzugsweise im Reinigungsmodus, in die Brühkammer eingeleitet. Auf diese Weise kann auf der Innenwand der Brühkammer ein geschlossener Wasserfilm gebildet werden.

Weitere Vorteile und Merkmale der Erfindung ergeben sich aus der Beschreibung der nachfolgenden Ausführungsbeispiele, wobei auf die beigefügte Zeichnung Bezug genommen wird.

In der Zeichnung zeigen
- Fig. 1a-b: ein Ausführungsbeispiel des Systems mit einem Teeautomaten und einem Teesiebsystem,
- Fig. 2: den Teesiebeinsatz des Teesiebsystems aus Fig. 1,
- Fig. 3: ein alternatives Ausführungsbeispiel für einen Teesiebeinsatz,
- Fig. 4: die Manschette des Teesiebsystems aus Fig. 1,
- Fig. 5: das Teesiebsystem aus Fig. 1,
- Fig. 6a-b: den Sprühkopf des Teeautomaten aus Fig. 1 in Seitenschnittansicht (Fig. 6a) und Ansicht von unten (Fig. 6b),
- Fig. 7a-g: ein Ausführungsbeispiel des Verfahrens zum Betrieb des *Systems* aus Fig. 1 und

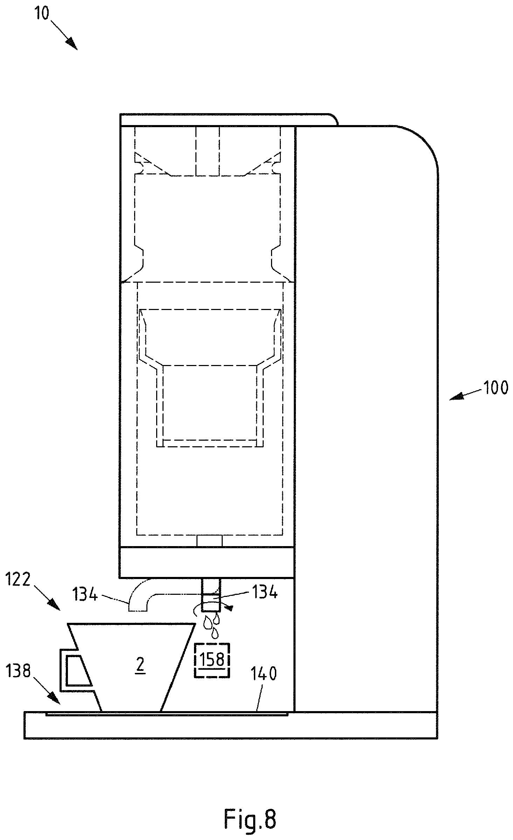

- Fig. 8: den Teeautomaten aus Fig. 1 in zwei verschiedenen Betriebszuständen.

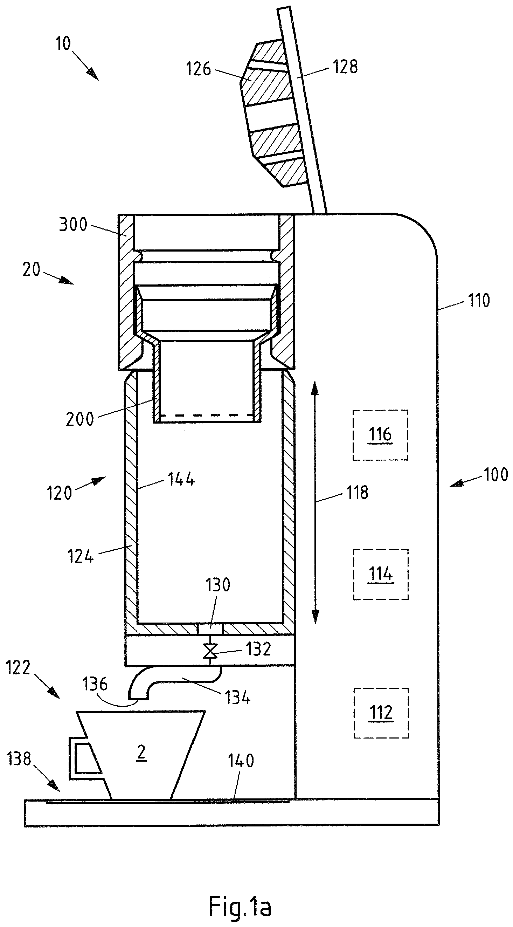

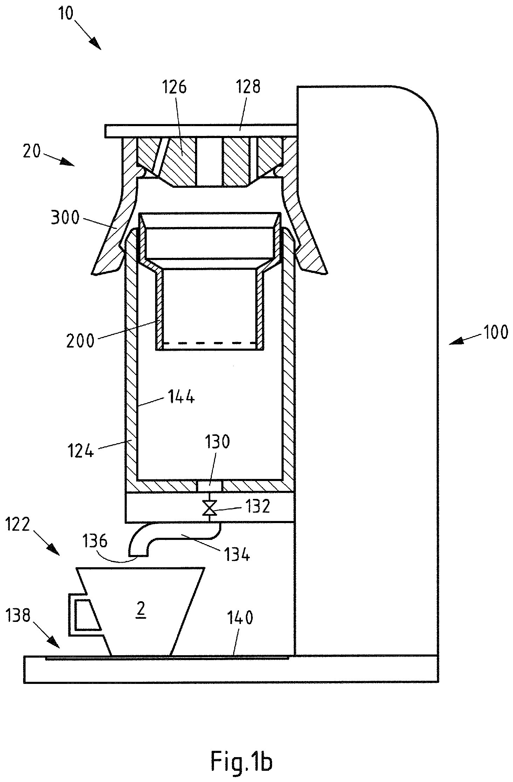

Fig. 1 zeigt ein Ausführungsbeispiel eines Systems 10 mit einem Teesiebsystem 20 und einem Teeautomaten 100. Der Teeautomat 100 umfasst ein Gehäuse 110, in dem eine Heißwasserversorgung 112, eine Steuerungseinrichtung 114, eine Bedieneinrichtung 116 und eine Verfahreinrichtung 118 untergebracht sind. Die Heißwasserversorgung 112 kann beispielsweise einen mit einer Wasserzuführung verbundenen Durchlauferhitzer aufweisen. Die Steuerungseinrichtung 114 kann insbesondere einen Mikroprozessor und einen damit verbundenen Speicher aufweisen, wobei der Speicher Befehle enthält, deren Ausführung auf dem Mikroprozessor die Steuerung des Teeautomaten 100 bewirken. Die Bedieneinrichtung 116 umfasst Bedienelemente, mit denen ein Benutzer auf verschiedene Optionen des Teeautomaten zugreifen kann. Beispielsweise kann die Bedieneinrichtung 116 einen Touchscreen aufweisen.

An dem Gehäuse 110 sind eine Brüheinheit 120 sowie eine darunter angeordnete Teegetränk-Ausgabestelle 122 vorgesehen.

Die Brüheinheit 120 umfasst eine nach oben geöffnete Brühkammer 124, beispielsweise in Form eines nach oben geöffneten Glaszylinders, und einen Sprühkopf 126, der an einem gegenüber dem Gehäuse 110 verschwenkbaren Deckel 128 angeordnet ist.

An der Unterseite der Brühkammer 124 ist ein Auslass 130 mit einem von der Steuerungseinrichtung 114 ansteuerbaren Ventil 132 vorgesehen. Durch Öffnen des Ventils 132 kann eine Flüssigkeit aus der Brühkammer 124 durch einen Auslassstutzen 134 zu einer Auslassöffnung 136 geleitet werden. Fig. 1a zeigt den Auslassstutzen 134 in einer *Ausgabestellung*, in der die Auslassöffnung 136 über der Teegetränk-Ausgabestelle 122 positioniert ist.

Die Teegetränk-Ausgabestelle 122 weist unterhalb der Auslassöffnung 136 in der Ausgabestellung eine Teesammelbehälteraufnahme 138 für einen Teesammelbehälter, wie zum Beispiel eine Teetasse 2 oder eine Teekanne, vorgesehen. Die Teegetränk-Ausgabestelle 122 weist weiterhin bevorzugt eine Abtropfschale 140 auf, in der aus der Auslassöffnung 136 austretende Flüssigkeit aufgefangen werden kann, wenn die Teesammelbehälteraufnahme 138 leer ist.

Der Sprühkopf 126 dient dazu, Wasser für einen Brühvorgang in die Brühkammer 124 einzuleiten. Zu diesem Zweck ist im Gehäuse 110 eine Zuleitung (nicht dargestellt) vorgesehen, die von der Heißwasserversorgung 112 bis zum Sprühkopf 126 läuft. Mit dem Sprühkopf 126 kann auch Wasser in die Brühkammer 124 eingeleitet werden, um diese zu spülen. Der Sprühkopf 126 kann optional auch mit Reinigungsflüssigkeit aus einem Reinigungsflüssigkeits-Reservoir versorgt werden, um die Brühkammer 124 zu reinigen.

Der Deckel 128 mit dem Sprühkopf 126 kann zwischen einer geöffneten Stellung (Fig. 1a) und einer geschlossenen Stellung (Fig. 1b) verschwenkt werden. In der geöffneten Stellung ist die Brühkammer 124 von oben zugänglich, so dass das Teesiebsystem 20 in den Teeautomaten 100 eingesetzt werden kann. Nach dem Einsetzen des Teesiebsystems 20 kann der Benutzer den Deckel 128 in die geschlossene Stellung verschwenken, so dass der Sprühkopf 126 oberhalb der Brühkammer 124 angeordnet ist und dadurch Wasser in die Brühkammer 124 einleiten kann.

Teesiebsystem 20 umfasst einen Teesiebeinsatz 200, der dazu eingerichtet ist, vollständig in die Brühkammer 124 eingeführt zu werden. Mit anderen Worten ist die Außenkontur des Teesiebeinsatzes 200 so an die Innenkontur der Brühkammer 124 angepasst, dass der Teesiebeinsatz 200 vollständig in die Brühkammer 124 hineingleiten kann.

Weiterhin umfasst das Teesiebsystem 20 eine Manschette 300, die dazu eingerichtet ist, den Teesiebeinsatz 200 aufzunehmen. Mit anderen Worten ist die Innenkontur der Manschette 300 so an die Außenkontur des Teesiebeinsatzes 200 angepasst, dass der Teesiebeinsatz 200 in die Manschette 300 eingesetzt werden kann.

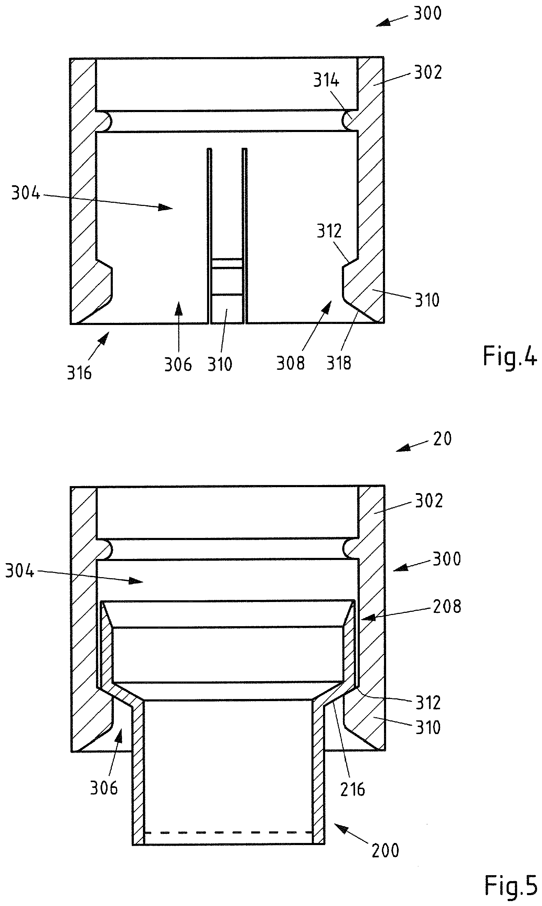

Für den Betrieb des Teeautomaten 100 wird der Teesiebeinsatz 200 von unten in die Manschette 300 eingesetzt (Fig. 5) und mit Teeblättern 4 befüllt. Das Teesiebsystem 20 wird sodann bei geöffneter Stellung des Deckels 128 in den Teeautomaten 100 eingesetzt. Durch Verschwenken des Deckels 128 in die geschlossene Stellung (Fig. 1b) wird die Manschette 300 auf die Brühkammer 124 aufgeschoben, so dass der Teesiebeinsatz 200 mit den Teeblättern 4 in die Brühkammer 124 gelangt und ein Brühvorgang gestartet werden kann.

Für den Brühvorgang wird durch den Sprühkopf 126 heißes Wasser in die Brühkammer 124 eingeleitet. Während des Brühvorgangs wird der Teesiebeinsatz 200 mittels der Verfahreinrichtung 118 in der Brühkammer 124 mehrfach auf und ab gefahren, so dass die Teeblätter 4 sich besser im Wasser in der Brühkammer 124 verteilen. Die Verfahreinrichtung 118 und der Teesiebeinsatz 200 sind vorzugsweise magnetisch miteinander gekoppelt. Beispielsweise kann die Verfahreinrichtung 118 einen Magneten und der Teesiebeinsatz 200 ein magnetisches Material aufweisen oder umgekehrt, so dass sich der Teesiebeinsatz durch das Auf- bzw. Abfahren des Magneten der Verfahreinrichtung 118 mitbewegt und so in der Brühkammer 124 verfahren lässt.

Am Ende des Brühvorgangs wird der Teesiebeinsatz 200 mit der Verfahreinrichtung 118 wieder aus der Brühkammer 124 heraus und in die Manschette 300 gefahren. Zeitgleich wird durch Ansteuerung des Ventils 132 das fertige Teegetränk aus der Brühkammer 124 durch den Auslass *130* in einen an der Teegetränk-Abgabestelle angeordneten Teesammelbehälter, wie eine Teetasse 2 oder eine Teekanne *ausgegeben.* Anschließend können der Deckel 128 wieder in *die* geöffnete *Stellung* verschwenkt und das Teesiebsystem 20 entnommen werden.

Die einzelnen Komponenten des Systems 10 und die einzelnen Verfahrensschritte des Brühvorgangs werden nun im Folgenden im Einzelnen beschrieben:

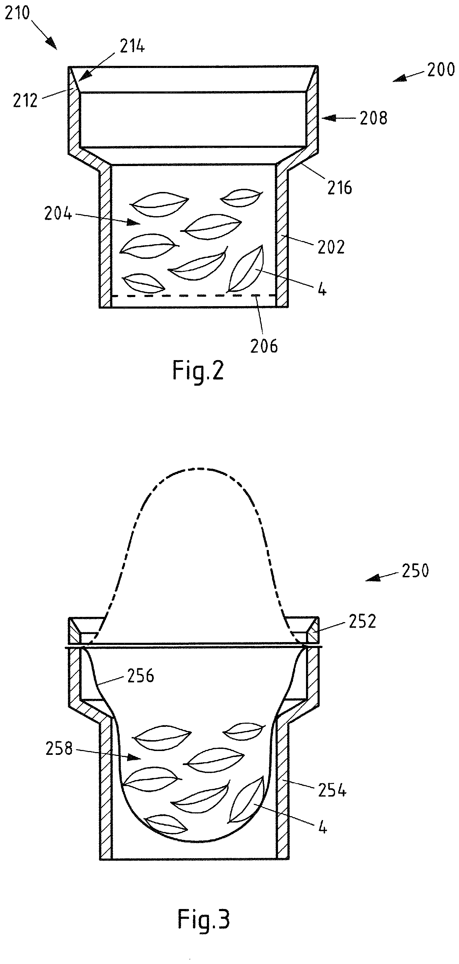

Fig. 2 zeigt den Teesiebeinsatz 200 in seitlicher Schnittansicht. Der Teesiebeinsatz 200 weist einen Teesiebeinsatzkörper 202 auf, der im dargestellten Ausführungsbeispiel im Wesentlichen rohrförmig ausgebildet ist und einen zur Oberseite des Teesiebeinsatzes 200 geöffneten Innenraum 204 für Teeblätter 4 umgibt. Der Innenraum 204 wird zur Unterseite durch ein am Teesiebeinsatzkörper 202 angebrachtes starres Teesieb 206 begrenzt, so dass Teeblätter nicht nach unten aus dem Teesiebeinsatz 200 heraus gelangen können.

Der Teesiebeinsatzkörper 202 weist im oberen Bereich einen Führungsabschnitt 208 auf, dessen Außenquerschnitt an den Innenquerschnitt der Brühkammer 124 angepasst ist. Der Führungsabschnitt 208 liegt, wenn der Teesiebeinsatzkörper 202 in der Brühkammer 124 angeordnet ist, an der Innenwand 144 der Brühkammer 124 an.

An der Oberseite weist der Teesiebeinsatzkörper 202 eine Abstreifeinrichtung 210 auf, die im vorliegenden Ausführungsbeispiel eine schräg nach außen gerichtete Abstreiflippe 212 umfasst. Wenn der Teesiebeinsatz 200 in der Brühkammer 124 angeordnet ist, liegt die Abstreiflippe 212 an der Innenwand 144 der Brühkammer 124 an, so dass beim Herauffahren des Teesiebeinsatzes 200 in der Brühkammer 124 Teeblätter von der Innenwand 144 abgestreift und durch die schräg nach innen zum Innenraum 204 gerichtete Innenfläche 214 der Abstreiflippe 212 in den Innenraum 204 geführt werden.

Fig. 3 zeigt ein alternatives Ausführungsbeispiel für einen Teesiebeinsatz 250, der anstelle des Teesiebeinsatzes 200 verwendet werden kann. Der Teesiebeinsatz 250 unterscheidet sich dadurch von dem Teesiebeinsatz 200, dass der Teesiebeinsatz 250 *anstelle des* Teesiebs 206 einen Haltering 252 aufweist, der *lösbar* mit *dem* Teesiebeinsatzkörper 254 des Teesiebeinsatzes 250 verbindbar ist, beispielsweise mittels einer Rastverbindung oder einer Magnetkupplung. Zwischen dem Haltering 252 und dem Teesiebeinsatzkörper 254 ist ein Teesieb 256 aus flexiblem Material einspannbar, beispielsweise aus Metallgeflecht oder Papier, Vlies oder Mull. Das Teesieb 256 bildet dann einen von dem Teesiebeinsatzkörper 254 umgebenen Innenraum 258, in dem Teeblätter 4 angeordnet werden können. Der Teesiebeinsatz 250 hat den Vorteil, dass sich das flexible Teesieb 256 beim Eintauchen in das in der Brühkammer 124 befindliche Wasser nach oben wölben lässt, wie in Fig. 3 durch die gestrichelte Linie angedeutet wird. Insbesondere kann sich das flexible Teesieb 256 beim Abwärtsbewegen des Teesiebeinsatzes 250 in der Brühkammer 124 auswölben, so dass die Teeblätter 4 aus dem Teesiebeinsatz 250 freigegeben werden.

Fig. 4 zeigt die Manschette 300 des Teesiebsystems 20 in seitlicher Schnittansicht. Die Manschette 300 wird im dargestellten Ausführungsbeispiel durch einen im Wesentlichen rohrförmigen Körper 302 gebildet, der eine Teesiebeinsatz-Aufnahme 304 umgibt. Die Manschette 300 weist eine unterseitige Öffnung 306 auf, durch die der Teesiebeinsatz 200 in die Teesiebeinsatz-Aufnahme 304 eingeführt werden kann. Zu diesem Zweck ist die Innengeometrie der Teesiebeinsatz-Aufnahme 304 an die Außengeometrie des Teesiebeinsatzes 200 angepasst. Fig. 5 zeigt die Situation, wenn der Teesiebeinsatz 200 in der Teesiebeinsatz-Aufnahme 304 der Manschette 300 aufgenommen ist.

Zur reversiblen Fixierung des Teesiebeinsatzes 200 in der Teesiebeinsatz-Aufnahme 304 ist an der Unterseite der Manschette 300 ein Verriegelungsmechanismus 308 in Form mehrerer Rastfinger 310 ausgebildet, die den Querschnitt der unterseitigen Öffnung 306 in der in Fig. 5 dargestellten verriegelten Stellung derart reduzieren, dass der Teesiebeinsatz 200 formschlüssig in der Teesiebeinsatz-Aufnahme 304 gehalten wird. Zu diesem Zweck weisen die Rastfinger 310 obere Anlageflächen 312 und der Teesiebeinsatz 200 weist eine untere Anlagefläche 216 auf, die in der verriegelten Stellung wie in Fig. 5 gezeigt aneinander anliegen.

Durch die oberen Anlageflächen 312 wird die Teesiebeinsatz-Aufnahme 304 nach unten begrenzt. Als obere Begrenzung der Teesiebeinsatz-Aufnahme 304 weist die Manschette 300 einen beispielsweise ringförmigen oberen Anschlag 314 auf. Die Höhe der Teesiebeinsatz-Aufnahme 304, d.h. im vorliegenden Ausführungsbeispiel der Abstand zwischen den oberen Anlageflächen 312 und dem oberen Anschlag 314, ist so an den Teesiebeinsatz 200 angepasst, dass dieser auch in verriegelter Stellung des Verriegelungsmechanismus 308 in der Manschette 300 beweglich ist. Die Höhe der Teesiebeinsatz-Aufnahme 304 ist also vorliegend größer als die Höhe des Führungsabschnitts 208.

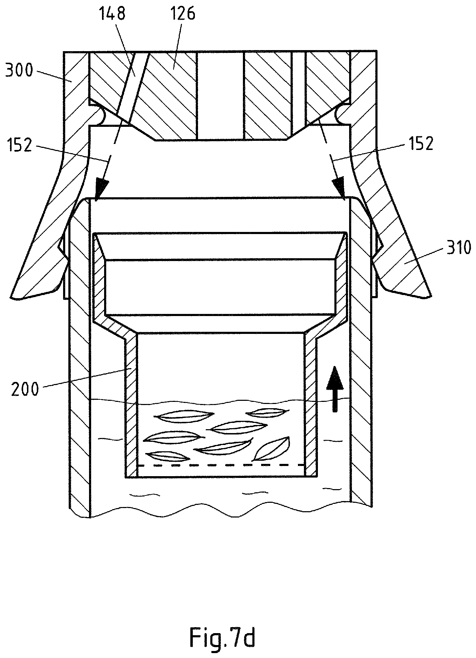

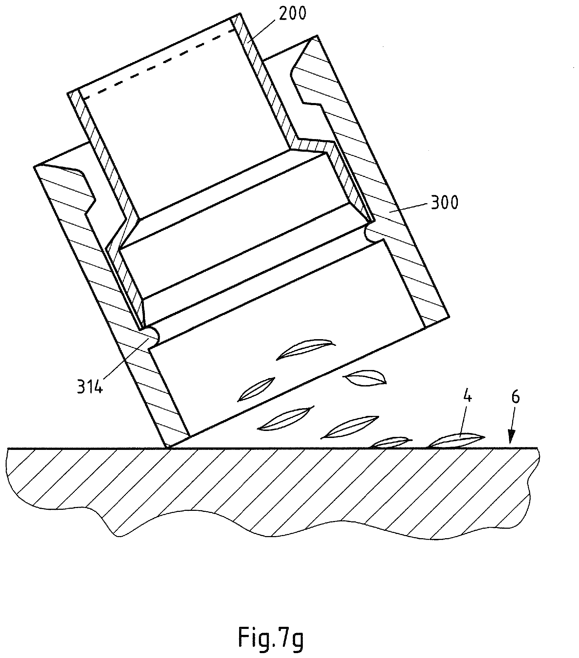

Die Manschette 300 ist so an die Brühkammer 124 angepasst, dass die Manschette 300 auf die Brühkammer 124 aufgesetzt werden kann. Zu diesem Zweck ist die unterseitige Öffnung 306 der Manschette 300 so bemessen, dass die Manschette zumindest ein Stück weit über die Brühkammer gestülpt werden kann. Die unterseitige Öffnung 306 stellt demnach gleichzeitig eine Brühkammer-Aufnahme 316 dar. Im Bereich der Brühkammer-Aufnahme 316 sind die Rastfinger 310 angeordnet, deren schräg nach innen verlaufenden Unterseiten Aktuatorflächen 318 bilden, um die Rastfinger 310 aufzuspreizen. Das Zusammenwirken der Manschette 300 mit der Brühkammer 124 wird weiter unten im Zusammenhang mit Fig. 7d beschrieben.

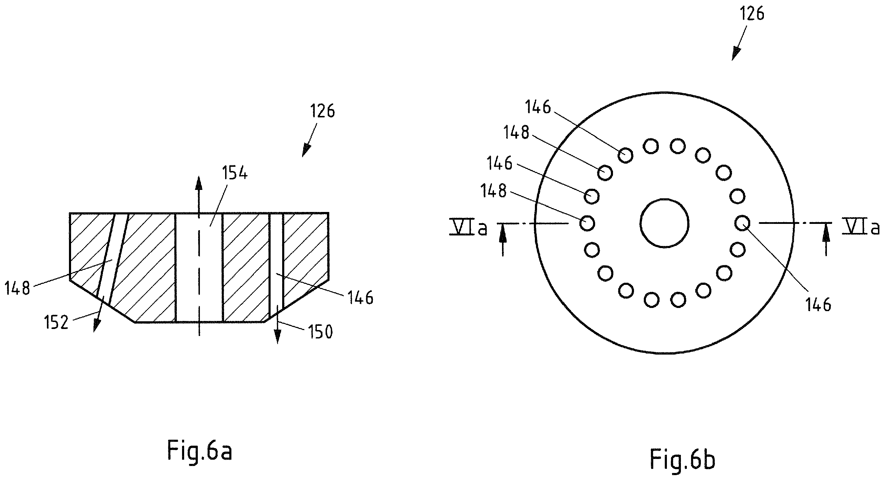

Die Fig. 6a-b zeigen den Sprühkopf 126 des Teeautomaten 100, und zwar einmal in seitlicher Schnittansicht (Fig. 6a) und einmal in Ansicht von unten (Fig. 6b). Der Sprühkopf 126 weist eine Mehrzahl von ersten Auslassdüsen 146 und von zweiten Auslassdüsen 148 auf. Die Auslassdüsen 146, 148 sind ringförmig jeweils abwechselnd an der Unterseite des Sprühkopfes 126 angeordnet sind, so dass durch diese Auslassdüsen eine Flüssigkeit in die Brühkammer 124 einleitbar ist, wenn der Deckel 128 mit dem Sprühkopf 126 in der geschlossenen Stellung ist (Fig. 1b).

Die ersten Auslassdüsen 146 sind so ausgerichtet, dass die aus diesen Auslassdüsen austretenden Wasserstrahlen150 im Wesentlichen in axialer Richtung des Sprühkopfes 126 *verläuft. Die* Winkel der Wasserstrahlen 150 zur *axialen* Richtung sind also praktisch gleich null. Die zweiten Auslassdüsen 148 sind hingegen so ausgerichtet, dass die aus diesen Auslassdüsen austretenden Wasserstrahlen 152 in größerem Winkel zur axialen Richtung verlaufen, d.h. schräg nach außen gerichtet ist.

Der Sprühkopf 126 kann vorzugsweise wahlweise in einem Befüllmodus bzw. in einem Reinigungsmodus betrieben werden, wobei im Befüllmodus nur aus den ersten Auslassdüsen 146 und im Reinigungsmodus auch oder nur aus den zweiten Auslassdüsen 148 eine Flüssigkeit austritt. In der in Fig. 1b gezeigten Position des Sprühkopfes 126 können damit im Befüllmodus Teeblätter 4 im Innenraum 204 des in der Brühkammer angeordneten Teesiebeinsatzes 200 mit Wasser beaufschlagt werden. Im Reinigungsmodus kann eine Flüssigkeit, beispielsweise Wasser oder eine spezielle Reinigungsflüssigkeit, auf die Innenwand 144 der Brühkammer 124 gerichtet werden.

Der Sprühkopf 126 weist eine Entlüftungsöffnung 154 auf, durch die beim Einleiten von Wasser in die Brühkammer 124 in der in Fig. 1b gezeigten Position des Sprühkopfes 126 Luft aus der Brühkammer 124 entweichen kann.

Im Folgenden wird nun ein Ausführungsbeispiel eines Verfahrens zum Betrieb des Systems 10 aus Fig. 1a beschrieben.

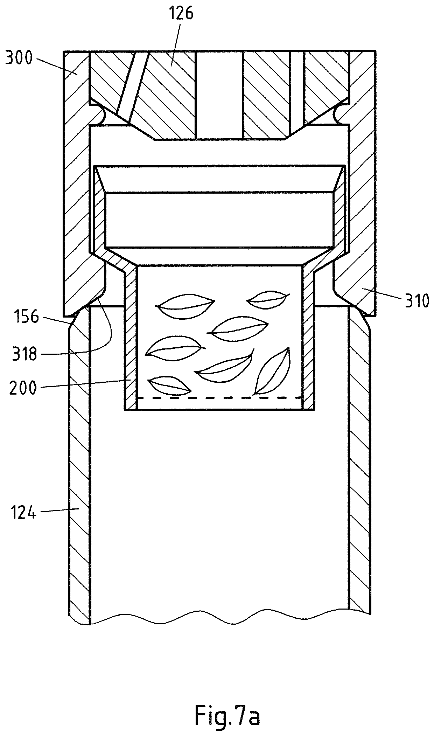

Vor Beginn eines Brühvorgangs setzt ein Benutzer des Teeautomaten 100 den Teesiebeinsatz 200 von unten in die Manschette 300 ein und setzt das Teesiebsystem 20 in den Teeautomaten 100 ein, wie in Fig. 1a gezeigt. In den Teesiebeinsatz 200 kann vor oder nach dem Einsetzen eine Portion loser Teeblätter 4 für den Brühvorgang eingefüllt werden. Fig. 7a zeigt die Anordnung der einzelnen Komponenten nach dem Einsetzen des Teesiebsystems 20 in den Teeautomaten 100. Die *Manschette* 300 *ist mit* der Brühkammer-Aufnahme 316 auf *die* Brühkammer 124 aufgesetzt, so dass die Aktuatorflächen 318 an einer korrespondierenden, schrägen Fase 156 der Brühkammer 124 anliegen.

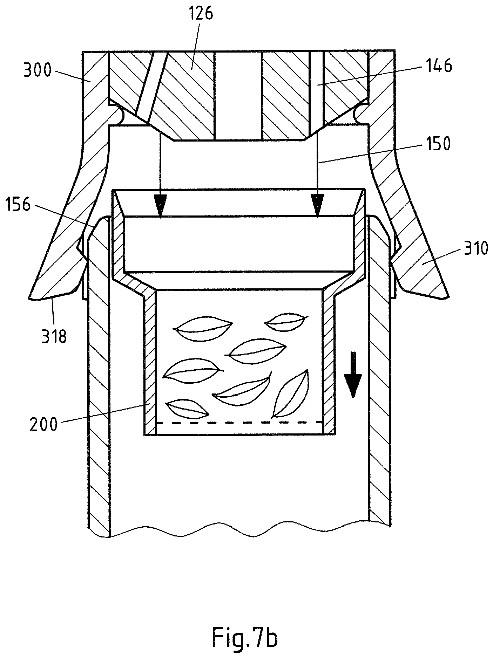

Beim Schließen des Deckels 128 wird die Manschette 300 weiter in Richtung des Bodens der Brühkammer 124 bewegt, so dass die schrägen Aktuatorflächen 318 auf der Fase 156 abgleiten und dadurch die Rastfinger 310 nach außen aufgespreizt werden, wie es in Fig. 7b dargestellt ist. Der Deckel 128 kann manuell durch den Benutzer geschlossen werden. Alternativ kann das Schließen des Deckels auch automatisch erfolgen, indem die Steuerungseinrichtung einen dafür vorgesehenen Motor ansteuert.

Durch das Aufspreizen der Rastfinger 310 wird die untere Öffnung 306 der Manschette 300 freigegeben, so dass der Teesiebeinsatz 200 in die Brühkammer 124 gelangt. Der Teesiebeinsatz 200 kann einfach unter Ausnutzung der Schwerkraft in die Brühkammer 124 herabfallen. Alternativ kann der Teesiebeinsatz 200 auch mit der Verfahreinrichtung 118 kontrolliert in die Brühkammer 124 gefahren werden. Weiterhin kann die Manschette 300 soweit herab bewegt werden, dass der obere Anschlag 314 der Manschette den Teesiebeinsatz 200 so weit in die Brühkammer 124 eingeführt hat, bis der Teesiebeinsatz 200 magnetisch an die Verfahreinrichtung 118 gekoppelt ist. Anschließend kann der Teesiebeinsatz 200 mit der Verfahreinrichtung 118 weiterbewegt werden.

Für die Zubereitung eines Teegetränks wird heißes Wasser aus dem Sprühkopf 126 in die Brühkammer 124 eingeleitet. Das heiße Wasser zur Zubereitung des Teegetränks kann durch die Manschette 300 hindurch in die Brühkammer 124 eingeleitet werden. Es ist damit nicht erforderlich, die Manschette 300 für den Brühvorgang von der Brühkammer 124 zu entfernen.

Für das Befüllen wird der Sprühkopf 126 vorzugsweise im Befüllmodus betrieben, bei dem im Wesentlichen senkrecht nach unten gerichtete Wasserstrahlen 150 aus den *ersten Auslassdüsen* 146 *austreten. Auf diese* Weise kann die Brühkammer 124 befüllt werden, ohne dass die Manschette 300 in Kontakt mit dem heißen Wasser kommt. Insbesondere *lässt sich* auf diese *Weise* auch eine potentielle *Verunreinigung des* Wassers durch die Manschette 300 vermeiden.

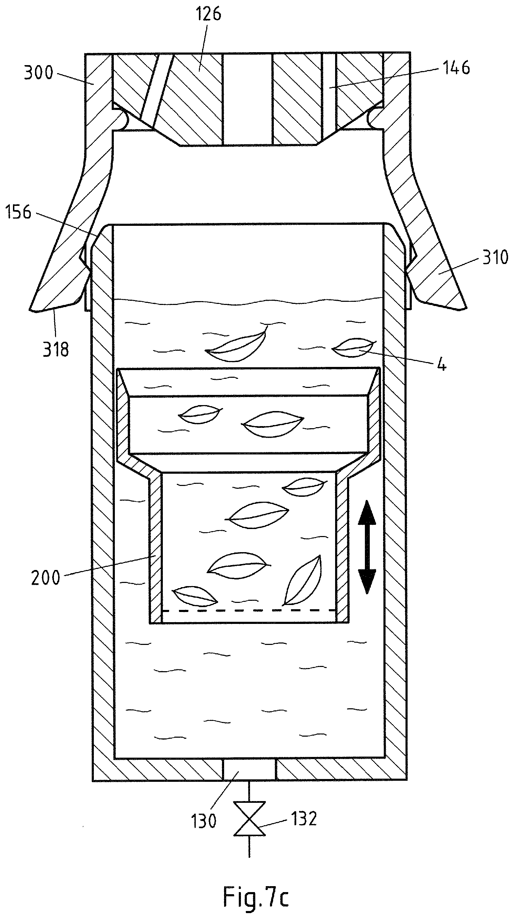

Nach dem Befüllen der Brühkammer 124 verbleiben die Teeblätter 4 für eine vorgegebene Brühzeit im Wasser, so dass sie ihre Inhaltsstoffe in gewünschtem Maße abgeben. Für eine bessere Extraktion der Inhaltsstoffe aus den Teeblättern und für eine gleichmäßigere Verteilung der Inhaltsstoffe im Wasser kann der Teesiebeinsatz 200 wie in Fig. 7c dargestellt während des Brühvorgangs mehrfach mit der Verfahreinrichtung 118 in der Brühkammer 124 auf und ab gefahren werden. Auf diese Weise werden die Teeblätter 4 im Wasser verteilt und sammeln sich nicht an der Wasseroberfläche.

Nach Ablauf der vorgegebenen Brühzeit, d.h. am Ende des Brühvorgangs, wird der Teesiebeinsatz 200 mit den ausgelaugten Teeblättern 4 durch die Verfahreinrichtung 118 aus dem Wasser (bzw. dem jetzt fertigen Teegetränk) herausgefahren, wie es in Fig. 7d dargestellt ist. Das fertige Teegetränk kann durch den unteren Auslass 130 aus der Brühkammer 124 zur Teegetränk-Ausgabestelle geleitet werden.

Vorzugsweise erfolgt das Herauffahren des Teesiebeinsatzes 200 und das Ausleiten des Teegetränks durch den Auslass 130 zeitgleich. Auf diese Weise spült das abfließende Wasser Teeblätter in den Innenraum 204 des Teesiebeinsatzes 200, so dass möglichst keine Teeblätter 4 an der Innenwand 144 der Brühkammer 124 zurückbleiben. Eventuell an der Innenwand 144 verbliebene Teeblätter 4 werden beim Herauffahren des Teesiebeinsatzes 200 durch die Abstreifeinrichtung 210 von der Innenwand 144 abgestreift und in den Innenraum 204 befördert. Ebenso kann mit der Abstreifeinrichtung 210 auch ein an der Innenwand 144 verbliebener Wasserfilm abgestreift werden, so dass die Innenwand 144 nach dem Herauffahren des Teesiebeinsatzes 200 nahezu rückstandsfrei gereinigt ist.

Die Innenwand 144 der Brühkammer kann auch durch Einleiten eines Wasserstoßes aus dem Sprühkopf gereinigt werden. Zu diesem Zweck wird der Sprühkopf *vorzugsweise* im Reinigungsmodus betrieben, *bei dem* schräg nach außen auf die Innenwand 144 gerichtete Wasserstrahlen 152 (gestrichelt in Fig. 7d angedeutet) aus den zweiten Auslassdüsen 148 austreten. Durch das an der Innenwand 144 herablaufende Wasser können Teeblätter 4 von der Innenwand 144 über die schräge Innenfläche 214 der Abstreifeinrichtung 210 in den Innenraum 204 des Teesiebeinsatzes 200 gespült werden. Es kann beispielsweise vorgesehen sein, im Reinigungsmodus einen kurzen Wasserstoß oder mehrere aufeinanderfolgende Wasserstöße bevorzugt unter erhöhtem Druck auf die Innenwand 144 zu richten.

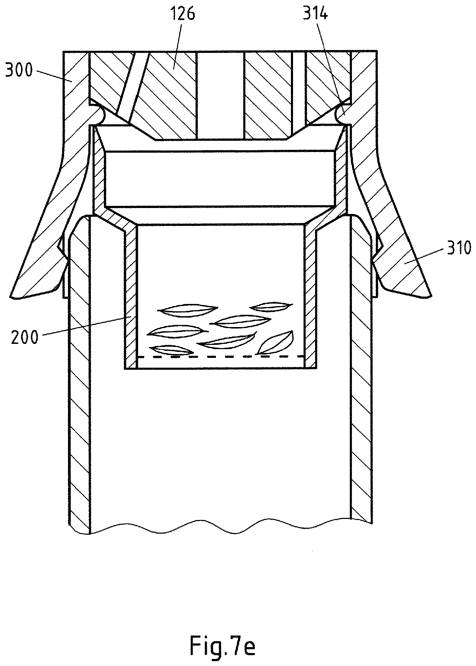

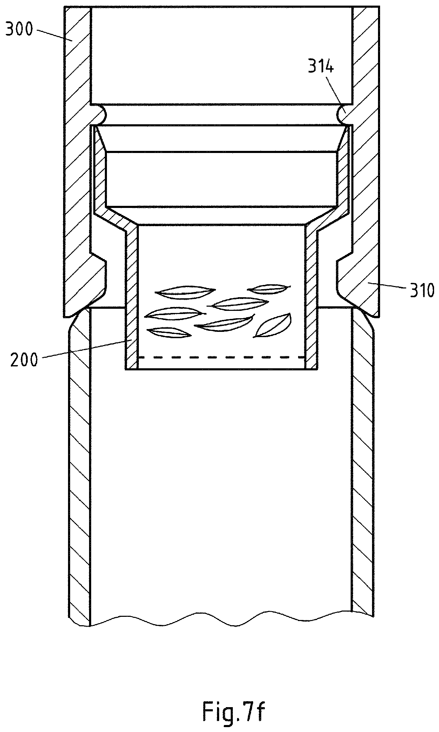

Der Teesiebeinsatz 200 wird durch die Verfahreinrichtung 118 vorzugsweise aus der Brühkammer 124 heraus und in die Manschette 300 hineingefahren. Sobald die Oberkante des Teesiebeinsatzes 200 am Anschlag 314 der Manschette 300 anliegt (Fig. 7e), wird die Manschette 300 beim weiteren Verfahren der Verfahreinrichtung 118 von der Brühkammer 124 abgehoben, so dass die Rastfinger 310 außer Eingriff mit der Brühkammer 124 gelangen, in die verriegelte Stellung zurückfedern und so den Teesiebeinsatz 200 wieder in der Teesiebeinsatz-Aufnahme 304 fixieren, wie in Fig. 7f dargestellt ist.

Der Teesiebeinsatz 200 kann nun durch einen Benutzer durch Ergreifen der Manschette 300 aus dem Teeautomaten 100 entnommen werden. Es ist nicht erforderlich, den vom Brühvorgang ggf. noch heißen Teesiebeinsatz 200 direkt anzufassen.

Um die ausgelaugten Teeblätter 4 aus dem Teesiebeinsatz 200 zu entfernen, kann der Teesiebeinsatz 200 mit der Manschette 300 umgedreht und z.B. gegen den Rand 6 eines Mülleimers gestoßen werden. Da die Höhe der Teesiebeinsatz-Aufnahme 304 in der Manschette 300 größer ist als die Höhe des Führungsabschnitts, rutscht der Teesiebeinsatz 200 in der Manschette 300 nach unten und stößt gegen den Anschlag 314. Der sich durch diesen *Aufprall* ergebende Impuls unterstützt das Lösen der Teeblätter 4 aus dem Teesiebeinsatz 200. Bei Bedarf kann diese Prozedur wiederholt werden, um alle Teeblätter 4 aus dem Teesiebeinsatz zu entfernen.

Das Teesiebsystem 20 mit dem Teesiebeinsatz 200 und der daran angepassten Manschette 300 erlaubt eine einfache Handhabung loser Teeblätter 4 zum Einsatz in dem beschriebenen Teeautomaten 100.

Insbesondere lässt sich die Manschette 300 einfach auf der Brühkammer 124 des Teeautomaten 100 positionieren und der Teesiebeinsatz 200 kann in die Brühkammer 124 eingebracht und aus dieser entfernt werden, ohne dass es erforderlich ist, den Teesiebeinsatz 200 direkt zu berühren. Der Aufbau des Teesiebeinsatzes 200 erlaubt zudem ein vollständiges Entfernen der Teeblätter 4 aus der Brühkammer 124. Weiterhin erleichtert der Aufbau der Manschette 300 wie in Fig. 7e dargestellt auch das Entfernen der Teeblätter 4 aus dem Teesiebeinsatz 200.

Die Brühkammer 124 kann vorzugsweise zwischen zwei Brühvorgängen gereinigt werden. Zu diesem Zweck kann durch den Sprühkopf Wasser oder eine spezielle Reinigungsflüssigkeit in die Brühkammer 124 eingeleitet werden. Beispielsweise kann der Teeautomat 100 ein Reinigungsflüssigkeits-Reservoir aufweisen, in dem eine Reinigungsflüssigkeit enthalten ist, die zur Reinigung der Brühkammer 124 verwendet oder dem zur Reinigung verwendeten Wasser zugesetzt wird. Bei der Reinigungsflüssigkeit kann es sich beispielsweise um ein Entkalkungsmittel wie zum Beispiel um eine Säure wie Zitronen- oder Essigsäure handeln. Ein Reinigungsvorgang kann auch mehrere Reinigungsgänge umfassen, wobei mindestens einmal eine Reinigungsflüssigkeit in die Brühkammer 124 eingeleitet und zumindest einmal mit Wasser nachgespült wird, um Reste der Reinigungsflüssigkeit aus der Brühkammer 124 zu entfernen.

Während des Reinigungsvorgangs wird der Sprühkopf vorzugsweise im Reinigungsmodus betrieben, so dass das Wasser oder die Reinigungsflüssigkeit gegen die Innenwand 144 der Brühkammer 124 gerichtet *ist* und diese dadurch *reinigt. Weiterhin ist bevorzugt der Auslassstutzen 134* zwischen *der* Ausgabestellung und einer Entsorgungsstellung verschwenkbar, insbesondere mittels eines Motors, der über die Steuerungseinrichtung 114 ansteuerbar ist. In der Entsorgungsstellung ist die Auslassöffnung 136 vorzugweise seitlich aus dem Bereich der Teegetränk-Ausgabestelle 122 herausgeschwenkt und kann beispielsweise über einer Abflussöffnung 158 angeordnet sein, so dass aus der Auslassöffnung 136 austretende Flüssigkeit in einen im Gehäuse 110 vorgesehenen Abwassertank (nicht dargestellt) oder durch eine Abflussleitung aus dem Teeautomaten 100 heraus abgeleitet werden kann. Vorzugsweise ist die Steuerungseinrichtung 114 dazu eingerichtet, den Auslassstutzen 134 in die Entsorgungsstellung zu verschwenken, wenn ein Reinigungsvorgang durchgeführt wird.

Alternativ zu einem verschwenkbaren Auslassstutzen 134 kann zum Beispiel auch ein Dreiwegeventil vorgesehen sein, mit dem eine Flüssigkeit von dem Auslass 130 entweder zu einer Auslassöffnung an der Teegetränk-Ausgabestelle 122 oder zu einem Abfluss geleitet werden kann.

Auf diese Weise kann erreicht werden, dass an der Teegetränk-Ausgabestelle 122 tatsächlich nur Teegetränke ausgegeben werden und Spül- bzw. Reinigungsflüssigkeit automatisch an anderer Stelle abgeleitet wird. Auf diese Weise kann beispielweise eine Teetasse 2 oder eine Teekanne während eines Reinigungsvorgangs an der Teegetränk-Ausgabestelle 122 verbleiben.

## Patentansprüche

1. Teeautomat (100), eingerichtet zur automatischen Zubereitung von Teegetränken,
- mit einer nach oben geöffneten Brühkammer (124),
- mit einer Heißwasserzuleitung, die dazu eingerichtet ist, heißes Wasser von oben in die Brühkammer (124) einzuleiten, und
- mit einem an der Brühkammer vorgesehenen Auslass (130), durch den eine Flüssigkeit aus der Brühkammer herausgeleitet werden kann,
**dadurch gekennzeichnet,**
- **dass** der Auslass (130) dazu eingerichtet ist, wahlweise in einer Ausgabestellung oder in einer Entsorgungsstellung betrieben zu werden, wobei die durch den Auslass aus der Brühkammer (124) herausgeleitete Flüssigkeit in der Ausgabestellung zu einer Teegetränk-Ausgabestelle (122) geleitet wird und in der Entsorgungsstellung zu einem Abfluss (158) geleitet wird.

2. Teeautomat nach Anspruch 1,
**dadurch gekennzeichnet, dass** der Auslass (130) einen verschwenkbaren Auslassstutzen (134) mit einer Auslassöffnung (136) umfasst, der zwischen einer Ausgabestellung, bei der die Auslassöffnung über einer Teesammelbehälteraufnahme (138) für einen Teesammelbehälter (2) angeordnet ist, und einer Entsorgungsstellung, bei der die Auslassöffnung über einer Abflussöffnung (158) angeordnet ist, verschwenkbar ist.

3. Teeautomat nach Anspruch 1 oder 2, weiter aufweisend eine Verfahreinrichtung (118), die dazu eingerichtet ist, einen Teesiebeinsatz (200, 250) in der Brühkammer (124) zu verfahren.

4. Teeautomat nach einem der Ansprüche 1 bis 4,
**dadurch gekennzeichnet, dass** die Heißwasserzuleitung einen Sprühkopf (126) umfasst, der so an der nach oben geöffneten Brühkammer (124) angeordnet werden kann, dass aus dem Sprühkopf Flüssigkeit in die Brühkammer einleitbar ist, wobei eine oder mehrere der Auslassdüsen (148) des Sprühkopfes so eingerichtet sind, dass, wenn der Sprühkopf an der Brühkammer angeordnet ist, die aus diesen Auslassdüsen austretende Flüssigkeit auf die Innenwand (144) der Brühkammer gerichtet ist.

5. Teeautomat nach einem der Ansprüche 1 bis 4, aufweisend eine Steuerungseinrichtung (114), die zur Steuerung des Teeautomaten entsprechend eines Verfahrens nach Anspruch 6 oder 7 eingerichtet ist.

6. Verfahren zum Betrieb eines Teeautomaten (100) nach einem der Ansprüche 1 bis 5, bei dem der Auslass (130) für die Ausgabe eines Teegetränks in die Ausgabestellung und für die Reinigung der Brühkammer (124) in die Entsorgungsstellung bewegt wird.

7. Verfahren nach Anspruch 6, umfassend folgende Schritte:
- Ansteuern der Verfahreinrichtung (118), um einen Teesiebeinsatz (200, 250) für einen Brühvorgang zum Aufbrühen von in dem Teesiebeinsatz angeordneten Teeblättern (4) in der Brühkammer (124) herab zu fahren,
- Einleiten von Wasser aus dem Sprühkopf (126) in die Brühkammer zum Aufbrühen eines Teegetränks, vorzugsweise im Befüllmodus des Sprühkopfes, und
- Auslassen des Teegetränks aus der Brühkammer durch den Auslass (130) in der Ausgabestellung.

## Claims

1. Tea maker (100), configured to automatically prepare tea beverages,
- having a brewing chamber (124) which is open upwards,
- having a hot water supply line configured to channel hot water into the brewing chamber (124) from above, and
- having an outlet (130) provided on the brewing chamber through which a liquid can be dispensed from the brewing chamber,
**characterised in that**
- the outlet (130) is configured to be operated selectively in a dispensing position or in a disposing position, wherein the liquid channelled out of the brewing chamber (124) through the outlet is channelled, in the dispensing position, to a tea beverage dispensing point (122) and is channelled, in the disposing position, to a drain (158).

2. Tea maker according to claim 1,
**characterised in that** outlet (130) has a pivotable outlet nozzle (134) with an outlet opening (136), which outlet nozzle is pivotable between a dispensing position, in which the outlet opening is arranged above a tea collecting container mount (138) for a tea collecting container (2), and a disposing position, in which the outlet opening is arranged above a drain opening (158).

3. Tea maker according to claim 1 or 2, further having a moving device (118) configured to move a tea strainer insert (200, 250) in the brewing chamber (124).

4. Tea maker according to any one of claims 1 to 3,
**characterised in that** the hot water supply line comprises a spray head (126), which can be arranged on the brewing chamber (124), which is open upwards, such that liquid can be channelled from the spray head into the brewing chamber, wherein one or a plurality of outlet nozzles (148) of the spray head are configured such that, when the spray head is arranged on the brewing chamber, the liquid escaping from these outlet nozzles is directed at the inner wall (144) of the brewing chamber.

5. Tea maker according to any one of claims 1 to 4, having a control device (114) configured to control the tea maker in accordance with a method according to claim 6 or 7.

6. Method for operating a tea maker (100) according to any one of claims 1 to 5, in which the outlet (130) is moved for the dispensing of a tea beverage into the dispensing position and for the cleaning of the brewing chamber (124) into the disposing position.

7. Method according to claim 6, comprising the following steps:
- actuating the moving device (118) in order to move a tea strainer insert (200, 250) down in the brewing chamber (124) for a brewing process to brew tea leaves (4) arranged in the tea strainer insert,
- channelling water from the spray head (126) into the brewing chamber to brew a tea beverage, preferably in the filling mode of the spray head and
- dispensing the tea beverage from the brewing chamber through the outlet (130) in the dispensing position.

## Revendications

1. Automate à thé (100), conçue pour la préparation automatique de boissons infusées,
- avec une chambre d'infusion ouverte vers le haut (124),
- avec une conduite d'amenée d'eau chaude qui est conçue pour introduire de l'eau chaude par le haut dans la chambre d'infusion (124), et
- avec un orifice de sortie (130) prévu au niveau de la chambre d'infusion, par lequel orifice de sortie un liquide peut être évacué de la chambre d'infusion, **caractérisé en ce que**
- l'orifice de sortie (130) est conçu pour être employé, au choix, dans une position de distribution ou dans une position d'élimination, où le liquide évacué de la chambre d'infusion (124) par l'orifice de sortie est amené, dans la position de distribution, à un point de distribution de boissons infusées (122) et est amené, dans la position d'élimination, à un écoulement d'eaux usées (158).

2. Automate à thé selon la revendication 1,
**caractérisé en ce que** l'orifice de sortie (130) comporte un embout d'évacuation pouvant pivoter (134) avec un ouverture d'évacuation (136), lequel embout est susceptible de pivoter entre une position de distribution, dans laquelle l'ouverture d'évacuation est agencée au dessus d'un logement de récipient de collecte de thé (138) pour un récipient de collecte de thé (2), et une position d'élimination, dans laquelle l'ouverture d'évacuation est agencée au dessus d'une ouverture d'écoulement d'eaux usées (158).

3. Automate à thé selon la revendication 1 ou 2, comportant en outre un dispositif de déplacement (118) qui est conçu pour déplacer un insert infuseur à thé (200, 250) dans la chambre d'infusion (124).

4. Automate à thé selon l'une des revendications 1 à 3,
**caractérisé en ce que** la conduite d'amenée d'eau chaude comporte une tête de pulvérisation (126) qui peut être agencée au niveau de la chambre d'infusion (124) ouverte vers le haut de telle sorte que du liquide en provenance de la tête de pulvérisation puisse être introduit dans la chambre d'infusion, une ou plusieurs buses de sortie (148) de la tête de pulvérisation étant conçues de telle sorte que, lorsque la tête de pulvérisation est agencée au niveau de la chambre d'infusion, le liquide sortant de ces buses de sortie est dirigé sur la paroi intérieure (144) de la chambre d'infusion.

5. Automate à thé selon l'une des revendications 1 à 4, présentant un dispositif de commande (114) qui est conçu pour commander l'automate à thé conformément à un procédé selon l'une des revendications 6 ou 7.

6. Procédé de fonctionnement d'un automate à thé (100) selon l'une des revendications 1 à 5, dans lequel l'orifice de sortie (130) est déplacé dans la position de distribution pour la distribution d'une boisson infusée et dans la position d'élimination pour le nettoyage de la chambre d'infusion (124).

7. Procédé selon la revendication 6, comportant les étapes suivantes :
- pilotage du dispositif de déplacement (118) afin de guider un insert infuseur à thé (200, 250) vers le bas dans la chambre d'infusion (124) pour un procédé d'infusion destiné à infuser des feuilles de thé (4) qui sont agencées dans l'insert infuseur à thé,
- introduction d'eau en provenance de la tête de pulvérisation (126) dans la chambre d'infusion afin d'infuser une boisson infusée, de préférence dans un mode de remplissage de la tête de pulvérisation, et
- évacuation de la boisson infusée hors de la chambre d'infusion à travers l'orifice de sortie (130) dans la position de distribution.
